# EUROPÄISCHE PATENTSCHRIFT

(11) **EP 3 100 838 B1**
(45) Veröffentlichungstag und Bekanntmachung des Hinweises auf die Patenterteilung: **20.12.2017**
(21) Anmeldenummer: 16157253.2
(22) Anmeldetag: 25.02.2016
(51) Int. Cl.: B29B 7/74, B29B 7/28, B29B 7/18

(54) **VERFAHREN ZUR HERSTELLUNG EINER GUMMIMISCHUNG MIT EINEM TANDEMMISCHER**
METHOD FOR PRODUCING A RUBBER COMPOSITION USING A TANDEM MIXER
PROCÉDÉ DE FABRICATION D'UN MÉLANGE DE CAOUTCHOUC METTANT EN OEUVRE UN MALAXEUR À DEUX NIVEAUX

(30) Priorität: 04.06.2015 DE 102015210342
(43) Veröffentlichungstag der Anmeldung: 07.12.2016
(73) Patentinhaber: Continental Reifen Deutschland GmbH, 30165 Hannover (DE)
(72) Erfinder: Steiner, Frank, 30451 Hannover (DE); Petricek, Jozef, 01861 Belusa (SK); Wortmann, Christopher, 30851 Langenhagen (DE)
(74) Vertreter: Widjaja, Wira

(56) Entgegenhaltungen:
- EP-A1- 1 170 108
- EP-A1- 1 457 520
- EP-A2- 0 277 558
- US-A- 5 711 904
- US-A1- 2008 161 486
- US-B1- 6 313 212
- PETER J ET AL: "DAS TANDEM-MISCHVERFAHREN (TEIL 4)", KAUTSCHUK + GUMMI KUNSTSTOFFE, HUTHIG VERLAG, HEIDELBERG [DE], Bd. 46, Nr. 7, 1. Juli 1993 (1993-07-01), Seiten 545-549, XP000384143, ISSN: 0948-3276

## Beschreibung

Die Erfindung betrifft ein Verfahren zur Herstellung einer Gummimischung.

Bei der Herstellung von Gummimischungen für Fahrzeugreifen ist es bekannt Tandemmischer einzusetzen. Der Tandemmischer wird verwendet um Mischungen insgesamt effizienter als in einem Einzelmischer herzustellen. Ein Nachteil bei der Herstellung von Gummimischungen mit Silica-Material besteht in der relativ langen Reaktionszeit für die Silanisierung der Mischung in dem oberen Mischer des Tandemmischers. Der Prozess in dem oberen Mischer ist dadurch sehr viel länger als im unteren Mischer, in dem die Fertigmischung hergestellt wird. Dadurch ergibt sich eine relativ lange Gesamtzykluszeit.

Die US 6 313 212 B1 offenbart ein bekanntes Verfahren zur Herstellung einer Gummimischung.

Der Erfindung liegt die Aufgabe zugrunde, ein Verfahren zu schaffen, mit dem der Herstellungsprozess zur Herstellung einer Gummimischung optimiert wird.

Gelöst wird die Aufgabe gemäß Anspruchs 1 mit einem Verfahren mit folgenden Schritten:
a) Hinzugabe von Rohmaterialien für die Gummimischung in den oberen Mischer des Tandemmischers,
   wobei die Rohmaterialien zumindestens Silica-Material umfassen,
b) Durchführung einer ersten Mischstufe mit den Rohmaterialien im oberen Mischer des Tandemmischers,
   wobei beim Mischvorgang eine Ziel-Mischtemperatur erreicht wird und für den Mischvorgang eine Mindest-Mischzeit vorgegeben wird,
   wobei mit dem Mischvorgang eine Silanisierung der Gummimischung initiiert wird,
c) Überführung der Gummimischung von dem oberen Mischer in eine Zwischenkammer mit einer Heizvorichtung und wärmeisolierten Kammerwänden,
   wobei die Zwischenkammer unterhalb vom oberen Mischer angeordnet ist,
d) Zwischenlagern der Gummimischung in der Zwischenkammer über eine vorgegebene Lagerungszeit,
   wobei die Silanisierung der Gummimischung in der Zwischenkammer fortgeführt wird,
e) Überführung der Gummimischung von der Zwischenkammer in den unteren Mischer, wobei der untere Mischer unterhalb der Zwischenkammer angeordnet ist,
f) Durchführung einer zweiten Mischstufe mit weiteren Mischungsbestandteilen im unteren Mischer des Tandemmischers,
   wobei die weiteren Mischungsbestandteile zumindest temperaturempfindliche Fertigmischchemikalien umfassen,
   wobei beim Mischvorgang eine Ziel-Mischtemperatur erreicht wird und für den Mischvorgang eine Mindest-Mischzeit vorgegeben wird,
g) Entnahme der Gummimischung aus dem unteren Mischer des Tandemmischers.

Ein Vorteil der Erfindung ist insbesondere darin zu sehen, dass durch das Verfahren der Herstellungsprozess zur Herstellung einer Gummimischung optimiert wird.

Durch das neue Verfahren wird die Gesamtzykluszeit zur Herstellung von Gummimischungen mit Silica-Material wesentlich reduziert. Der Prozess der Silanisierung der Gummimischung wird zumindest teilweise von dem oberen Mischer in die Zwischenkammer verlagert. Dadurch kann schon früher der obere Mischer mit neuem Material befüllt werden. Die Verweilzeit der Gummimischung im oberen Mischer und im unteren Mischer kann dadurch ebenfalls angeglichen werden. Im Ergebnis führt das Verfahren zu einer erheblichen Durchsatzsteigerung des Tandemmischers, weil die Verweilzeit der Gummimischung im oberen Mischer deutlich verkürzt wird. Weitere Vorteile des Verfahrens sind eine verbesserte Prozessstabilität sowie die Verbesserung von Produkteigenschaften, die durch die verbesserte Gummimischung erzielt werden.

In einer vorteilhaften Ausführung der Erfindung ist vorgesehen, dass mit dem Verfahren eine Gummimischung für Laufstreifenmaterial hergestellt wird.

Das Verfahren eignet sich besonders für die Herstellung von Laufstreifenmaterial. Eine hohe Produktqualität beim Laufstreifenmaterial hat einen besonders großen Einfluss auf die Verbesserung der Produkteigenschaften beim Fahrzeugreifen.

In einer weiteren vorteilhaften Ausführung der Erfindung ist vorgesehen, dass bei Schritt d) die Gummimischung mit der Heizvorrichtung aktiv beheizt wird,
wobei in der Zwischenkammer die weitergeführte Silanisierung der Gummimischung über eine vorgegebene Zwischenlagerungszeit erfolgt.

Auf diese Weise kann die Gummimischung auf einer konstanten Temperatur gehalten werden, die für die Fortsetzung der Silanisierung der Gummimischung von hoher Bedeutung ist.

In einer weiteren vorteilhaften Ausführung der Erfindung ist vorgesehen, dass bei Schritt b) beim Mischvorgang im oberen Mischer eine Ziel-Mischtemperatur zwischen ca. 140°C bis 190 °C, vorzugsweise ca. 165°C, erreicht wird,
wobei die Mischzeit ca. 2 bis 4 Minuten, vorzugsweise ca. 3 Minuten, beträgt.

Bei dieser Zielmischtemperatur und -mischzeit wird eine optimale Durchmischung der Rohmaterialien erreicht.

In einer weiteren vorteilhaften Ausführung der Erfindung ist vorgesehen, dass bei Schritt d) die Gummimischung in der Zwischenkammer auf einer Zieltemperatur zwischen ca. 140°C bis 190 °C, vorzugsweise ca. 165°C, gehalten wird,
wobei die Lagerungszeit ca. 2 bis 4 Minuten, vorzugsweise ca. 3 Minuten, beträgt. Dadurch wird die Silanisierung der Gummimischung optimal fortgeführt. Ausserdem werden die Verweilzeiten der Gummimischungen im oberen Mischer und in der Zwischenkammer synchronisiert.

In einer weiteren vorteilhaften Ausführung der Erfindung ist vorgesehen, dass bei Schritt f) beim Mischvorgang im unteren Mischer eine Ziel-Mischtemperatur zwischen ca. 100 °C bis 130 °C, vorzugsweise ca. 120 °C, erreicht wird,
wobei die Mischzeit ca. 2 bis 4 Minuten, vorzugsweise ca. 3 Minuten, beträgt.

Auf diese Weise wird die Verweilzeit der Gummimischung im oberen und unteren Mischer im Wesentlichen zu einander synchronisiert.

In einer weiteren vorteilhaften Ausführung der Erfindung ist vorgesehen, dass beim Mischvorgang im unteren Mischer eine Rework-Fertigmischung zum Abkühlen der Gummimischung hinzugegeben wird.
Dadurch wird die Zieltemperatur im unteren Mischer wesentlich schneller erreicht.

Anhand eines Ausführungsbeispiels soll die Erfindung näher erläutert werden.

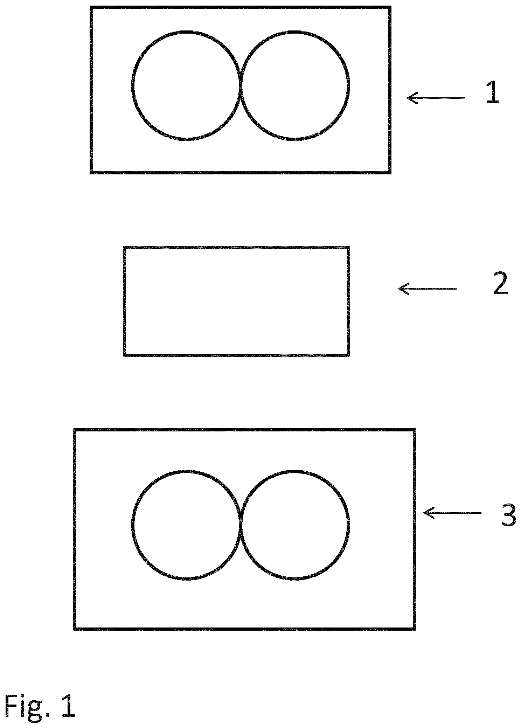

Die Figur 1 zeigt eine Prinzipskizze des Tandemmischers. Die Rohmaterialien der Gummimischung werden zunächst dem oberen Mischer 1 zugeführt. Die Rohmaterialien umfassen insbesondere Silica-Material. Die Verweilzeit im oberen Mischer beträgt zwischen 2 und 4 Minuten, wobei im oberen Mischer die Silanisierung der Gummimischung initiiert wird. Nach der ersten Mischstufe wird die Gummimischung in die Zwischenkammer 2 unterhalb des oberen Mischers 1 überführt. In der Zwischenkammer 2 wird die Gummimischung mit einer Heizvorrichtung auf einer konstanten Temperatur gehalten. Die Zieltemperatur in der Zwischenkammer entspricht im Wesentlichen der Zieltemperatur im oberen Mischer, wobei diese Zieltemperatur vorzugweise bei ca. 165° Celsius liegt. Die Verweilzeit der Gummimischung in der Zwischenkammer beträgt ca. 3 Minuten. Anschließend wird die Gummimischung aus der Heizkammer 2 in den unteren Mischer 3 überführt. Im unteren Mischer erfolgt die Herstellung der Fertigmischung. Es wird eine sogenannte Rework-Mischung hinzugefügt, die eine Abkühlung der Gummimischung bewirkt. Die Verweilzeit der Gummimischung im unteren Mischer beträgt ebenfalls ca. 3 Minuten. Die Verweilzeit im oberen Mischer und im unteren Mischer sind im Wesentlichen zueinander synchronisiert. Auf diese Weise ergibt sich eine wesentliche Durchsatzsteigerung bei der Herstellung von Gummimischungen mit dem Tandemmischer.

### Bezugszeichenliste (ist Teil der Beschreibung)

- 1: Oberer Mischer
- 2: Zwischenkammer
- 3: Unterer Mischer

## Patentansprüche

1. Verfahren zur Herstellung einer Gummimischung mit einem Tandemmischer mit folgenden Schritten:
a) Hinzugabe von Rohmaterialien für die Gummimischung in den oberen Mischer (1) des Tandemmischers,
wobei die Rohmaterialien zumindestens Silica-Material umfassen,
b) Durchführung einer ersten Mischstufe mit den Rohmaterialien im oberen Mischer (1) des Tandemmischers,
wobei beim Mischvorgang eine Ziel-Mischtemperatur erreicht wird und für den Mischvorgang eine Mindest-Mischzeit vorgegeben wird,
wobei mit dem Mischvorgang eine Silanisierung der Gummimischung initiiert wird,
c) Überführung der Gummimischung von dem oberen Mischer (1) in eine Zwischenkammer (2) mit einer Heizvorichtung und wärmeisolierten Kammerwänden,
wobei die Zwischenkammer (2) unterhalb vom oberen Mischer (1) angeordnet ist,
d) Zwischenlagern der Gummimischung in der Zwischenkammer (2) über eine vorgegebene Lagerungszeit,
wobei die Silanisierung der Gummimischung in der Zwischenkammer (2) fortgeführt wird,
e) Überführung der Gummimischung von der Zwischenkammer (2) in den unteren Mischer,
wobei der untere Mischer (3) unterhalb der Zwischenkammer (2) angeordnet ist,
f) Durchführung einer zweiten Mischstufe mit weiteren Mischungsbestandteilen im unteren Mischer (3) des Tandemmischers,
wobei die weiteren Mischungsbestandteile zumindest temperaturempfindliche Fertigmischchemikalien umfassen,
wobei beim Mischvorgang eine Ziel-Mischtemperatur erreicht wird und für den Mischvorgang eine Mindest-Mischzeit vorgegeben wird,
g) Entnahme der Gummimischung aus dem unteren Mischer (3) des Tandemmischers.

2. Verfahren nach Anspruch 1,
**dadurch gekennzeichnet, dass**
mit dem Verfahren eine Gummimischung für Laufstreifenmaterial hergestellt wird.

3. Verfahren nach einem der vorhergehenden Ansprüche,
**dadurch gekennzeichnet, dass**
bei Schritt d) die Gummimischung mit der Heizvorrichtung beheizt wird,
wobei in der Zwischenkammer (2) die weitergeführte Silanisierung der Gummimischung über eine vorgegebene Zwischenlagerungszeit erfolgt.

4. Verfahren nach einem der vorhergehenden Ansprüche,
**dadurch gekennzeichnet, dass**
bei Schritt b) beim Mischvorgang im oberen Mischer (1) eine Ziel-Mischtemperatur zwischen ca. 140°C bis 190 °C, vorzugsweise ca. 165°C, erreicht wird,
wobei die Mischzeit ca. 2 bis 4 Minuten, vorzugsweise ca. 3 Minuten, beträgt.

5. Verfahren nach einem der vorhergehenden Ansprüche,
**dadurch gekennzeichnet, dass**
bei Schritt d) die Gummimischung in der Zwischenkammer (2) auf einer Zieltemperatur zwischen ca. 140°C bis 190 °C, vorzugsweise ca. 165°C, gehalten wird,
wobei die Lagerungszeit ca. 2 bis 4 Minuten, vorzugsweise ca. 3 Minuten, beträgt.

6. Verfahren nach einem der vorhergehenden Ansprüche,
**dadurch gekennzeichnet, dass**
bei Schritt f) beim Mischvorgang im unteren Mischer (3) eine Ziel-Mischtemperatur zwischen ca. 100 °C bis 130 °C, vorzugsweise ca. 120 °C, erreicht wird,
wobei die Mischzeit ca. 2 bis 4 Minuten, vorzugsweise ca. 3 Minuten, beträgt.

7. Verfahren nach einem der vorhergehenden Ansprüche,
**dadurch gekennzeichnet, dass**
beim Mischvorgang im unteren Mischer (3) ein Rework-Fertigmischung zum Abkühlen der Gummimischung hinzugegeben wird.

## Claims

1. Method for producing a rubber mixture using a tandem mixer, with the following steps:
a) adding raw materials for the rubber mixture into the upper mixer (1) of the tandem mixer,
the raw materials comprising at least silica material,
b) carrying out a first mixing stage with the raw materials in the upper mixer (1) of the tandem mixer,
a target mixing temperature being reached during the mixing operation and a minimum mixing time being prescribed for the mixing operation,
a silanization of the rubber mixture being initiated in the mixing operation,
c) transferring the rubber mixture from the upper mixer (1) into an intermediate chamber (2) with a heating device and heat-insulated chamber walls,
the intermediate chamber (2) being arranged under the upper mixer (1),
d) intermediately storing the rubber mixture in the intermediate chamber (2) over a prescribed storage time,
the silanization of the rubber mixture being continued in the intermediate chamber (2),
e) transferring the rubber mixture from the intermediate chamber (2) into the lower mixer,
the lower mixer (3) being arranged under the intermediate chamber (2),
f) carrying out a second mixing stage with further constituents of the mixture in the lower mixer (3) of the tandem mixer,
the further constituents of the mixture comprising at least temperature-sensitive ready-mix chemicals, a target mixing temperature being reached during the mixing operation and a minimum mixing time being prescribed for the mixing operation,
g) removing the rubber mixture from the lower mixer (3) of the tandem mixer.

2. Method according to Claim 1,
**characterized in that**
a rubber mixture for tread material is produced by the method.

3. Method according to one of the preceding claims,
**characterized in that**
in step d), the rubber mixture is heated by the heating device, the continued silanization of the rubber mixture taking place in the intermediate chamber (2) over a prescribed intermediate storage time.

4. Method according to one of the preceding claims,
**characterized in that**
in step b), during the mixing operation in the upper mixer (1), a target mixing temperature of between about 140°C and 190°C, preferably about 165°C, is reached,
the mixing time being about 2 to 4 minutes, preferably about 3 minutes.

5. Method according to one of the preceding claims,
**characterized in that**
in step d), the rubber mixture is kept in the intermediate chamber (2) at a target temperature of between about 140°C and 190°C, preferably about 165°C, the storage time being about 2 to 4 minutes, preferably about 3 minutes.

6. Method according to one of the preceding claims,
**characterized in that**
in step f), during the mixing operation in the lower mixer (3), a target mixing temperature of between about 100°C and 130°C, preferably about 120°C, is reached, the mixing time being about 2 to 4 minutes, preferably about 3 minutes.

7. Method according to one of the preceding claims,
**characterized in that**
during the mixing operation in the lower mixer (3), a rework ready mix is added for cooling down the rubber mixture.

## Revendications

1. Procédé de fabrication d'un mélange de caoutchouc à l'aide d'un mélangeur tandem, le procédé présentant les étapes suivantes :
a) apport des matières premières du mélange de caoutchouc dans le mélangeur supérieur (1) du mélangeur tandem,
les matières premières comprenant au moins une matière à base de silice,
b) exécution d'une première étape de mélange des matières premières dans le mélangeur supérieur (1) du mélangeur tandem,
une température visée de mélange étant atteinte lors de l'opération de mélange et une durée minimale de mélange étant prédéterminée pour l'opération de mélange,
une silanisation du mélange de caoutchouc étant amorcée par l'opération de mélange,
c) transfert du mélange de caoutchouc du mélangeur supérieur (1) jusque dans une chambre intermédiaire (2) dotée d'un dispositif de chauffage et de parois isolées thermiquement, la chambre intermédiaire (2) étant disposée en dessous du mélangeur supérieur (1),
d) entreposage temporaire du mélange de caoutchouc dans la chambre intermédiaire (2) pendant une durée d'entreposage prédéterminée,
la silanisation du mélange de caoutchouc se poursuivant dans la chambre intermédiaire (2),
e) transfert du mélange de caoutchouc de la chambre intermédiaire (2) jusque dans le mélangeur inférieur,
le mélangeur inférieur ((3) étant disposé en dessous de la chambre intermédiaire (2),
f) exécution d'une deuxième étape de mélange avec d'autres composants de mélange dans le mélangeur inférieur (3) du mélangeur tandem,
les autres composants de mélange comprenant au moins des mélanges prêts à l'emploi de produits chimiques sensibles à la température,
une température cible de mélange étant atteinte pendant l'opération de mélange et une durée minimale de mélange étant prédéterminée pour l'opération de mélange,
g) enlèvement du mélange de caoutchouc hors du mélangeur inférieur (3) du mélangeur tandem.

2. Procédé selon la revendication 1, **caractérisé en ce que** le procédé prépare un mélange de caoutchouc pour le matériau de bandes de roulement.

3. Procédé selon l'une des revendications précédentes, **caractérisé en ce qu'**à l'étape d), le mélange de caoutchouc est chauffé à l'aide du dispositif de chauffage, la poursuite de la silanisation du mélange de caoutchouc s'effectuant pendant une durée prédéterminée d'entreposage temporaire dans la chambre intermédiaire (2).

4. Procédé selon l'une des revendications précédentes, **caractérisé en ce qu'**à l'étape b), une température cible de mélange comprise entre environ 140°C et 190°C et de préférence d'environ 165°C est atteinte lors de l'opération de mélange dans le mélangeur supérieur (1), la durée du mélange étant d'environ 2 à 4 minutes et de préférence d'environ 3 minutes.

5. Procédé selon l'une des revendications précédentes, **caractérisé en ce qu'**à l'étape d), le mélange de caoutchouc est maintenu dans la chambre intermédiaire (2) à une température cible de mélange comprise entre environ 140°C et 190°C et de préférence d'environ 165°C, la durée d'entreposage étant d'environ 2 à 4 minutes et de préférence d'environ 3 minutes.

6. Procédé selon l'une des revendications précédentes, **caractérisé en ce qu'**à l'étape f), une température cible de mélange comprise entre environ 100°C et 130°C et de préférence d'environ 120°C est atteinte lors de l'opération de mélange dans le mélangeur inférieur (3), la durée de mélange étant d'environ 2 à 4 minutes et de préférence d'environ 3 minutes.

7. Procédé selon l'une des revendications précédentes, **caractérisé en ce que** lors de l'opération de mélange dans le mélangeur inférieur (3), on ajoute un mélange terminé dit "Rework" pour refroidir le mélange de caoutchouc.
